(19)

Europäisches
Patentamt
European
Patent Office
Office européen
des brevets

(11) **EP 2 048 659 B1**

(12) **EUROPEAN PATENT SPECIFICATION**

(45) Date of publication and mention
of the grant of the patent:
**17.08.2011   Bulletin 2011/33**

(51) Int Cl.:
*G10L 21/02* *(2006.01)*     *H04M 1/60* *(2006.01)*
*H04M 9/08* *(2006.01)*     *H04R 3/00* *(2006.01)*

(21) Application number: **07019652.2**

(22) Date of filing: **08.10.2007**

(54) **Gain and spectral shape adjustment in audio signal processing**

Verstärkung und Spektralformenanpassung bei der Verarbeitung von Audiosignalen

Gain et réglage de forme spectrale dans un traitement de signal audio

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**15.04.2009   Bulletin 2009/16**

(73) Proprietor: **Harman Becker Automotive Systems
GmbH
76307 Karlsbad (DE)**

(72) Inventors:
• **Schmidt, Gerhard
89081 Ulm (DE)**
• **Iser, Bernd
89077 Ulm (DE)**

(74) Representative: **Grünecker, Kinkeldey,
Stockmair & Schwanhäusser
Anwaltssozietät
Leopoldstrasse 4
80802 München (DE)**

(56) References cited:
**EP-A- 1 677 431        DE-A1- 10 141 493
JP-A- 2000 190 785**

• **WOLFGANG TÄGER: "Etudes en traitement
d'antenne pour la prise de son"[Online] 28
October 1998 (1998-10-28), XP002463250 Univ.
Rennes I Retrieved from the Internet: URL:http:
//www.wolfgang-taeger.de/these04. pdf>
[retrieved on 2007-12-20]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### Field of Invention

The present invention relates to audio signal processing, in particular, to gain and spectral shape adjustment of a speech signal on in a hands-free set based on an estimated local noise and local echo. The hands-free set may be installed in a vehicle.

### Background of the invention

Noise reduction and echo compensation are important issues in the art of audio signal processing in communication systems as, e.g., hands-free telephone sets. Two-way speech communication of two communication parties mutually transmitting and receiving audio signals, in particular, speech signals, often suffers from deterioration of the quality of the audio signals by background noise. Background noise in noisy environments can severely affect the quality and intelligibility of voice conversation and can, in the worst case, lead to a complete breakdown of the communication.

In the case of a (telephone) hands-free set, e.g., it has to be avoided that signals received from a remote party and output by loudspeakers at the near end are fed again in the communication system by microphones at the near end and transmitted back to the remote party. Detection of signals by the microphones that are output by the loudspeakers can result in annoying acoustic echoes, if the acoustic echoes are not significantly attenuated or substantially removed.

Several methods for echo compensation have been proposed and implemented in communication systems in recent years. Adaptive filters are employed for echo compensation of acoustic signals (see, e.g., Acoustic Echo and Noise Control, E. Hänsler and G. Schmidt, John Wiley & Sons, New York, 2004) that are used to model the transfer function (impulse response) of the loudspeaker-room-microphone (LRM) - system by means of an adaptive finite impulse response (FIR) filter.

In the context of vehicle entertainment and communication system methods for adapting the output volume, e.g., of a radio, in response to estimated local noise are known. In hands-free communication in vehicles, the microphone signals suffer from a relatively low Signal-to-Noise Ratio (SNR). Consequently, some noise reduction must be employed in order to improve the speech signal quality.

A usual method to improve the signal quality in distant talking speech acquisition is the utilization of multi-channel systems, i.e. microphone arrays, as described in "Microphone Arrays: Signal Processing Techniques and Applications", eds. Brandstein, M. and Ward, D., Springer, Berlin 2001.

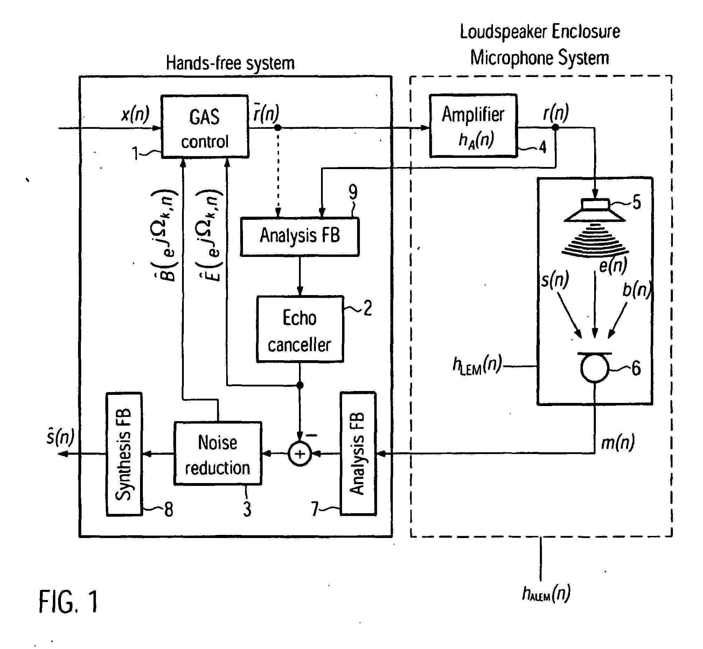

DE 101 41 493 A1 discloses a mobile telephone comprising a microphone and a loud speaker (2 and 6 of Figure 1) which is configured for automatic adaptation of the gain of an output signal output by the loud speaker independence on the level of acoustic input signal detected by the microphone and a method to adjust the levels of call signals and alarm signals depending on levels of such signals output by the loudspeaker and detected by the microphone.

JP 2000 190785 A discloses an on-vehicle acoustic system comprises a microphone for detecting the noise level inside the vehicle interior, a filter for filtering the output signals of the microphone in relation to passband characteristics adapted to frequency characteristics considering the auditory sense of humans, a level control part for detecting the level of the output signals of the filter, and a volume correcting means to correct the sound volume by processing acoustic signals out from a sound source 1 in accordance with the detection level of the level control part.

W. Täger, in a thesis entitled "Etudes en traitment d'antenne pour la prise de son", October 28, 1998, describes an echo canceller and a noise reduction means

EP -A- 1 677 431 discloses a system adapted to receive an input signal from a far end transmission, to take in a near end return signal, and to inject into the return signal, prior to sending the return to the far end, a corrective signal whereby, for example, echoes in the return signal may be reduced or cancelled The system includes one or more adaptive infinite impulse response filters and one or more adaptive finite-impulse response filters running in parallel each having an output that may be selected as the corrective signal based on filter performance determinations.

However, a severe problem is caused by time-dependent perturbations resulting in a temporarily varying SNR and a significantly affected intelligibility of received speech signals, since fast and reliable adaptation of the employed noise reduction filters cannot be guaranteed, for instance. Moreover, the intelligibility is also affected, since not only the gain of the wanted signal is insufficient but also the spectral shape of the wanted signal is deteriorated due to perturbations and acoustic echoes.

Therefore, there is a need for an improved method for signal processing in hands-free sets on the receiver side resulting in enhanced audio signals, in particular, speech signals showing less deterioration due to noise and/or echoes as compared to the art. The method must, in particular, be implemented in embedded systems with limited computer resources and, thus, has to be designed and optimized in view of low processor loads and little memory demands.

**Description of the Invention**

The above-mentioned problem is solved by the method for audio signal processing in a communication system comprising a near party and a remote party according to claim 1. The method comprises the steps of receiving an audio signal that is transmitted by the remote party to the near party; receiving a microphone signal from the near party; estimating local background noise present in the microphone signal; estimating local acoustic echo present in the microphone signal; and adjusting the gain of the received audio signal based on the estimated local background noise and the estimated local acoustic echo.

The method operates on one side of a communication system, e.g., a telephone system. The remote party at a remote side transmits an acoustic signal, e.g., a speech signal, to the near party at a near side. Herein, by the expression "party" a near side or remote side communication device being part of the above-mentioned communication system is meant. As it is usual in the art, the gain of the received signal is to be adjusted at the near side. It is known in the art to adjust the gain based on an estimate of the local noise at the near side (i.e., the receiving side in the present context).

However, in the present invention local acoustic echo is also estimated and the estimated echo is used for adjusting the gain of the received audio signal. The near party comprises a microphone and a loudspeaker. The local echo is the echo component of a microphone signal obtained at the near side that is due to a loudspeaker output. At the near side the microphone detects this loudspeaker output, local background noise and a wanted signal, in particular, a speech signal of a near side user. The local echo can be estimated by means of an echo compensation filtering means as known in the art. By means of a linear (EP 0204718 B1) or non-linear (EP 1020068 B1; WO-A-96/26592) adaptive filter a replica of the acoustic feedback is synthesized and a compensation signal is obtained from the received signal (reference signal). This compensation signal is subtracted from the sending signal of the microphone thereby generating an enhanced resulting signal to be sent to the remote party. It is noted that the echo estimation in the present invention might be based on a reference signal obtained from the received signal before or after amplification (see detailed description below).

Since the gain of the received signal is adjusted depending on both the estimate of the local noise and the local echo, the signal-to-noise ratio (SNR) can almost be maintained constant (and at a high level) close to the ears of a local user/speaker at the near side. Thus, the intelligibility of a received speech signal can significantly be improved. The method is advantageously implemented in a hands-free set telephone set, e.g., a hands-free set installed in a vehicle. Such a hands-free set is usually provided with both some echo canceling means and some noise reduction means and, therefore, the inventive method can readily be implemented in present day hands-free sets. The method successfully operates for both highly time varying local background noise, e.g., caused by changing driving speeds and road pavements, and changing signal level (power) of the received signals from a remote communication partner whereby an automatic gain control is obtained.

According to a preferred embodiment the method may also comprise adjusting the spectral shape of the received audio signal (x(n)) based on the estimated local background noise and the estimated local acoustic echo. By adjusting the spectral shape, i.e. equalization, of the received audio signal (x(n)) the quality of the signal is further enhanced and the intelligibility of a received speech signal received by a hands-free set is significantly improved.

Equalization (modifying the frequency envelope of an audio signal) can be performed by means of either an Infinite Impulse Response (IIR) filter or an Finite Impulse Response (FIR) filter. Both kinds of filter have individual advantages. Whereas finite impulse response (FIR) filters are stable, since no feedback branch is provided, recursive infinite impulse response (IIR) filters typically meet a given set of specifications with a much lower filter order than a corresponding FIR filter. Efficient processing in terms of computational time may be achieved more readily by IIR filters, but these filters may suffer demand for permanent stability checks. In particular applications, a small gain peak may be modeled better by an IIR filter than by an FIR filter and a small attenuation peak may be modeled better by an FIR filter than by an IIR filter.

Thus, according to an embodiment a desired spectral shape is modeled by both an IIR filter and an FIR filter, the model results of both filters are compared with each other, e.g. for each frame separately, and (for each frame) the model result that better matches the desired spectral shape is used for adjusting the spectral shape of the received audio signal (x(n)).

The spectral shape of the received audio signal (x(n)) can be adjusted by means of an IIR filter based on the Inverse Discrete Fourier Transform of the squared magnitude of the desired spectral shape and/or an FIR filter based on the Inverse Discrete Fourier Transform of the inverse of the squared magnitude of the desired spectral shape.

Adjustment of the gain and/or the spectral shape of the received signal can efficiently by performed on the basis of an estimate of the average peak echo-to-noise ratio basically given by the summed up and averaged spectral estimate for the local echo and the summed up and averaged spectral estimate for the background noise (both at some time n) multiplied by the gain introduced by the adjustment of the gain (at time n - 1); see detailed description below. Advantageously, the estimate of the average peak echo-to-noise ratio is smoothed in frequency, e.g., by means for a first order IIR filter, in order to avoid the generation of artifacts due to outliers and/or annoying abrupt adjustment results.

The present invention also provides a computer program product, comprising one or more computer readable media having computer-executable instructions for performing the steps of an example of the herein disclosed method for audio signal processing in a communication system comprising a near party and a remote party.

The above-mentioned problem is also solved by a signal processing means for processing a received audio signal transmitted by a remote party to a near party, comprising

at least one microphone configured to generate a microphone signal from the near party; a noise reduction filtering means configured to output a signal representing an estimate of local background noise that is present in the microphone signal; an echo compensation filtering means configured to output a signal representing an estimate of local echo that is present in the microphone signal; and a gain and shape control unit connected with the noise reduction filtering means and the echo compensation filtering means and configured to adjust gain and/or spectral shape of the received audio signal based on both the signal representing an estimate of local background noise and the signal representing an estimate of local echo.

The signal processing means may also comprise an amplifier and the echo compensation filtering means may be configured to receive a reference signal necessary for adaptation of its filter coefficient either before or after amplification of the received audio signal processed by the gain and shape control unit.

According to an example, the gain and shape control unit of the signal processing means comprises an FIR filter and/or an IIR filter configured to adjust the spectral shape of the received audio signal ($x(n)$). Moreover, the gain and shape control unit of the signal processing means may comprise a means configured to estimate the average peak echo-to-noise ratio.

In one advantageous embodiment the signal processing means may further comprise a means for smoothing in frequency the estimated average peak echo-to-noise ratio.

The signal processing means may comprise one or more microphones, in particular, a microphone array comprising one or more directional microphones and a beamforming means (see e.g., "Adaptive beamforming for audio signal acquisition", by Herbordt, W. and Kellermann, W., in "Adaptive signal processing: applications to real-world problems", p.155, Springer, Berlin 2003) configured to obtain a beamformed microphone signal. In this case the local echo and the background noise on the near side are obtained from the beamformed signal or from one or more signals obtained by the microphones of the microphone array before beamforming.

Moreover, the herein disclosed signal processing means may further comprise a transmitting means for transmitting the microphone signal filtered by the echo compensation filtering means and the noise reduction filtering means to a remote party.

Large parts of the processing can suitably be performed in the sub-band regime. Therefore, the signal processing means may comprise a first analysis filter bank configured to divide the microphone signal into microphone sub-band signals, a second analysis filter bank configured to divide a reference signal into sub-band signals to be input in the echo compensation filtering means and a synthesis filter bank configured to synthesize the microphone sub-band signals after they have been filtered by the echo compensation filtering means and the noise reduction filtering means.

The present invention also provides a hands-free set, in particular, installed in a vehicle, e.g., an automobile, comprising a signal processing means according to one of the above examples of a signal processing means according to the present invention.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates two alternative examples of a realization of the inventive hands-free system employing a gain and shape control unit based on estimated echo and noise.

Figure 2 illustrates an example of the gain and shape control unit of Figure 1 comprising a gain control, a shape control and an FIR filter in some detail.

Figure 3 illustrates the gain processing of the gain control of Figure 2 in detail.

Figure 4 illustrates the adjustment of the gain when the shape control of Figure 2 is active.

Figure 5 illustrates the adaptation of the FIR filter of Figure 2 by means of the Levinson Durbin algorithm.

As shown in Figure 1 a realization of the herein disclosed audio signal processing in a hands-free set comprises a gain and shape control (GAS) unit 1 which is supplied with a speech signal $x(n)$ that was transmitted by a remote party and received by the hands-free set. The GAS control unit 1 is provided for enhancing the quality of the received signal $x(n)$ by an appropriate gain and shape processing and outputs an enhanced speech signal $\tilde{r}(n)$.

The hands-free set comprises an echo compensation filtering means 2 as well as a noise reduction filtering means 3. Since filtering of a microphone signal obtained by a microphone 6 is performed in the sub-band regime (processing in the frequency domain would, of course, also be possible instead), the hands-free set comprises an analysis filter bank 7 for dividing a microphone signal obtained by the microphone 6 of the hands-free set into microphone sub-band signals. Accordingly, the filtered microphone sub-band signals are synthesized by a synthesis filter bank 8 to obtain an enhanced signal $\hat{s}(n)$.

It is a basic feature of the present invention that the GAS control unit 1 operates on the basis of an estimated echo component and an estimated noise component present that are present in a microphone signal obtained by one or more microphones of the hands-free set. In the present example the echo compensation filtering means 2 outputs a frequency selected estimate of the echo component $\hat{E}(e^{j\Omega k},n)$, where $\Omega_k$ and n denote the frequency sub-band and the discrete time index as known in the art, to the GAS control unit 1. The noise reduction filtering means 3 outputs the square-root of the estimated short-term spectral power density $\hat{B}(e^{j\Omega k}, n)$ of the noise present in the microphone signal m(n) to the GAS control unit 1.

The enhanced speech signal $\tilde{r}$(n) is transmitted from the GAS control unit 1 to an amplifier 4 that supplies an amplified signal r(n) to a loudspeaker that outputs the processed speech signal with an increased intelligibility due to the processing by the GAS control unit 1.

On the other hand, a microphone 6 of the hands-free set detects a speech signal s(n) of a local speaker together with an echo component e(n) produced by the loudspeaker and some background noise b(n) due to noise perturbations. The microphone signal m(n) = s(n) + e(n) + b(n) is filtered by the analysis filter bank 7 to obtain microphone sub-band signals that are echo compensated by the echo compensation filtering means 2 and noise reduced by the noise reduction filtering means 3. The thus enhanced microphone sub-band signals are synthesized by the synthesis filter bank 8 to obtain an enhanced signal $\hat{s}$(n) that is to be transmitted to a remote party by a transmission means (not shown).

According to one embodiment the filter coefficients of the echo compensation filtering means 2 are adapted to model the impulse response $h_{LEM}$(n) of the loudspeaker - enclosure - microphone system represented by the loudspeaker and the microphone of the hands-free set as well as the enclosure/room wherein the hands-free set is installed, e.g., a vehicular cabin. In this case, r(n) is input as a reference signal to the echo compensation filtering means 2 in order to adapt the filter coefficients of the echo compensation filtering means 2 (e(n) = r(n) * hLEM(n)).

In an alternative embodiment, the echo compensation filtering means 2 is supplied for adaptation of the filter coefficients by the signal $\tilde{r}$(n) output by the GAS control unit 1 (before amplification by the amplifier 4). In this case, the echo compensation filtering means 2 has to perform two convolutions of time-dependent systems namely for the impulse (frequency) response $h_A$(n) of the amplifier 4 and the impulse response $h_{LEM}$(n) of the loudspeaker - enclosure - microphone system, i.e. it models a combined impulse response $h_{ALEM}$(n), e(n) = $\tilde{r}$(n) * $h_{ALEM}$(n), see Figure 1. Either r(n) or $\tilde{r}$(n) is input in an analysis filter bank 9 similar to the analysis filter bank 7 for the operation of the echo compensation filtering means 2 in the sub-band regime. Both analysis filter banks 7 and 9 as well as the synthesis filter bank 8 may comprise Hann or Hamming windows as known in the art.

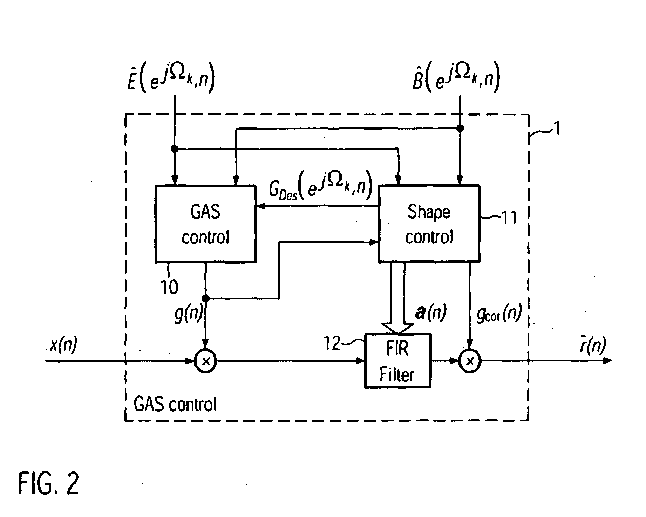

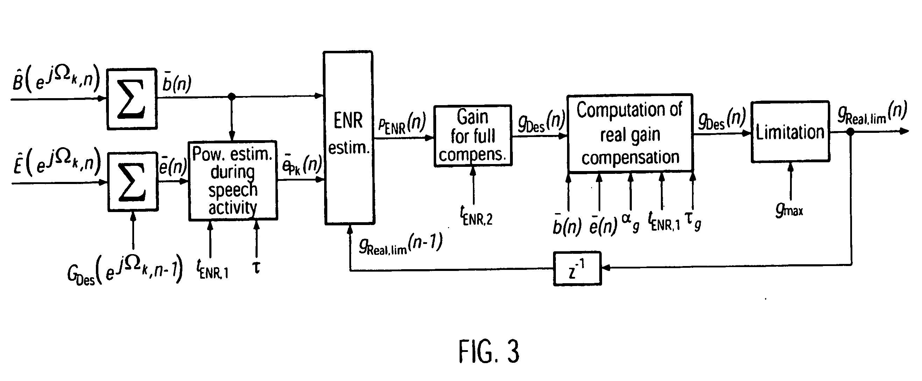

In the present example, both the gain and the spectral shape of the received signal x(n) are changed to improve the quality of the signal transmitted by a remote party. Fig. 2 shows the GAS control unit 1 of Fig. 1 in some more detail. According to the present invention the gain is controlled on the basis of estimates of both noise and acoustic echo that are present in the microphone signal m(n). The spectral estimates $\hat{E}(e^{j\Omega k}, n)$ and $\hat{B}(e^{j\Omega k}, n)$ obtained by the echo compensation filtering means 2 and the noise reduction filtering means 3, respectively, are summed up and averaged (see also Figure 3 illustrating the operation of the gain control 10 in some more detail):

$$\bar{b}(n) \quad = \frac{1}{\dfrac{N_{FFT}}{2}+1} \sum_{k=0}^{N_{FFT}/2} \left| \hat{B}(e^{j\Omega_k},n) \right|$$

where $N_{FFT}$ denotes the order of the FFT (number of interpolation points) and, if the shape control is not active,

$$\bar{e}(n) \quad = \frac{1}{\dfrac{N_{FFT}}{2}+1} \sum_{k=0}^{N_{FFT}/2} \left| \hat{E}(e^{j\Omega_k},n) \right|.$$

Whereas the present invention is particularly useful in the case of a combined operation of the gain and shape control (see reference signs 10 and 11 in Fig. 2) it can be restricted to the operation of the gain control 10. In this case the above equation determines the summed up and averaged spectral estimates for the echo. If, however, the shape control 11 is active, the above expression for the averaged estimate for the echo is to be replaced by

$$\overline{e}(n) \quad = \frac{1}{\dfrac{N_{FFT}}{2}+1} \sum_{k=0}^{N_{FFT}/2} \frac{\left|\hat{E}(e^{j\Omega_k},n)\right|}{G_{Des}(e^{j\Omega_k},n)}$$

where $G_{Des}(e^{j\Omega k}, n)$ is the desired gain that is output by the shape control 11 (see description below). Thereby, independent functionality of the gain control 10 and the shape control 11 can be guaranteed when both are active.

Depending on the actual application it is sufficient to use only some portion of the entire bandwidth and, thus, the summation may be shortened ($< N_{FFT} / 2$). The normalization factor before the summations is not obligatory.

By the gain control 10 an average peak echo level $\overline{e}_{Pk}(n)$ is determined by smoothing whenever a predetermined echo-to-noise (ENR) threshold ($t_{ENR, 1}$) is exceeded (see also Figure 3)

$$\overline{e}_{Pk}(n) = \begin{cases} \tau\overline{e}(n) + (1-\tau)\overline{e}_{Pk}(n-1), & \text{if } \dfrac{\overline{e}(n)}{\overline{b}(n)} > t_{ENR,1} \\ \overline{e}_{Pk}(n-1), & \text{otherwise} \end{cases}$$

where the smoothing constant is chosen as $0 < T << 1$. Other ways of smoothing can be used, e.g., by multiplication by two different time constants for falling and increasing echo power, respectively. For $t_{ENR,1}$ values out of the interval [2, 10] have proven to be advantageous.

The average peak ENR can, thus, be determined by

$$p_{ENR}(n) = \frac{\overline{e}_{Pk}(n)}{\overline{b}(n)\, g_{Real,lim}(n-1) + \varepsilon}$$

where $p_{ENR}(n)$ is compensated for the gain introduced by the gain control 10 $g_{Real,lim}(n-1)$ and the small constant $\varepsilon << 1$ is added in the denominator to avoid division by zero.

A desired gain $g_{Des}(n)$ for establishing a constant ENR level ($t_{ENR,2}$) in order to improve the intelligibility of the received speech signal $x(n)$ is determined by

$$g_{Des}(n) \quad = \begin{cases} \dfrac{t_{ENR,2}}{P_{ENR}(n)}, & \text{if } P_{ENR}(n) < t_{ENR,2} \\ 1, & \text{otherwise} \end{cases}$$

For $t_{ENR,2}$ values out of the interval [4, 30] have proven to be advantageous.

A preliminary gain can thus be determined by the gain control 10 as

$$g_{Real}(n) = \begin{cases} g_{Real}(n-1)\,\tau_{g,rise}, \\ \text{for } (1-\alpha_g)g_{Real}^2(n-1)+\alpha_g\,g_{Real}(n-1) \le g_{Des}(n) \text{ and } \dfrac{\overline{e}(n)}{\overline{b}(n)} > t_{ENR,1}, \\ g_{real}(n-1)\,\tau_{g,fall}, \\ \text{for } (1-\alpha_g)g_{Real}^2(n-1)+\alpha_g\,g_{Real}(n-1) > g_{Des}(n) \text{ and } \dfrac{\overline{e}(n)}{\overline{b}(n)} > t_{ENR,1}, \\ g_{Real}(n-1); \text{ otherwise} \end{cases}$$

where the characteristic can be adjusted by the positive real parameter $\alpha_g < 1$. The increment and decrement parameters $\tau_{g,rise}$ and $\tau_{g,fall}$ satisfy

$$0 \ll \tau_{g,fall} < 1 < \tau_{g,rise} \ll \infty.$$

The preliminary gain, thus, is adjusted ranging from merely compensating the current signal-to-noise ratio up to the predetermined limit of $t_{ENR,2}$ and can be limited to a maximum allowable gain $g_{max}$ (see Figure 3):

$$g_{Real,lim}(n) = \min\{g_{max}, g_{Real}(n)\}.$$

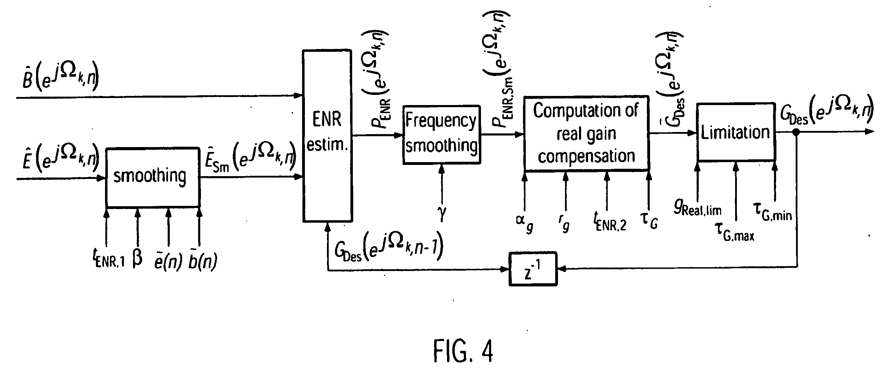

If the shape control is not active, an enhanced signal $\widetilde{r}(n) = \widetilde{r}_{Gain}(n) = g_{Real,lim}(n)\,x(n)$ is obtained. By the processing described above the gain increases as time-dependent noise increases and also when the background noise is almost stationary but the speech power of a remote speaker decreases (thereby realizing an automatic gain control).
In the example shown in Fig. 2 shaping of $x(n)$ is performed by means of a Finite Impulse Response (FIR) Filter 12 controlled by the shape control 11. It is noted that an Infinite Impulse Response (IIR) Filter could alternatively be employed. Figure 4 illustrates the operation of the shape control in detail. An average peak echo level is determined by the shape control 11 by smoothing the estimated echo spectrum provided by the echo compensation filtering means 2 of Figure 1 each time a predetermined ENR threshold ($t_{ENR,1}$) is exceeded similar to the above-described determination by the gain control 10 but for each frequency bin

$$\hat{E}_{Sm}(e^{j\Omega_k},n) = \begin{cases} \beta|\hat{E}(e^{j\Omega_k},n)|+(1-\beta)\hat{E}_{Sm}(e^{j\Omega_k},n-1), \text{ if } \dfrac{\overline{e}(n)}{\overline{b}(n)} > t_{ENR,1} \\ \hat{E}_{Sm}(e^{j\Omega_k},n-1) \end{cases}$$

with $0 < \beta \ll 1$. Thus, a spectral average peak ENR is obtained

$$P_{ENR}(e^{j\Omega_k},n) = \frac{\hat{E}_{Sm}(e^{j\Omega_k},n)}{|\hat{B}(e^{j\Omega_k},n)|G_{Des}(e^{j\Omega_k},n)+\varepsilon}$$

that advantageously is smoothed in the positive and negative frequency directions to obtain a smoothed spectral average peak ENR, i.e. $P_{ENR,Sm}(e^{j\Omega k}, n)$. The smoothing can, e.g., be performed by a first order IIR filter. The desired gain vector is obtained by (see Figure 4)

$$\tilde{G}_{Des}(e^{j\Omega_k},n) = \begin{cases} G_{Des}(e^{j\Omega_k},n-1)\tau_g, \\ \quad \text{if } ((1-\alpha_s)G_{Des}^2(e^{j\Omega_k},n-1)+\alpha_s G_{Des}(e^{j\Omega_k},n-1))P_{ENR,Sm}(e^{j\Omega_k},n) > t_{ENR,2} \\ G_{Des}(e^{j\Omega_k},n-1)\tau_G \text{ , otherwise.} \end{cases}$$

with $0 < \alpha_s < 1$ and $0 \ll T_g < 1 < T_G \ll \infty$.

After limitation of the desired gain in the directions of the maximum gain and maximum attenuation, respectively, one gets

$$G_{Des}(e^{j\Omega_k},n) = \min\left\{T_{G,max}(n),\max\left\{T_{G,min}(n),\tilde{G}_{Des}(e^{j\Omega_k},n)\right\}\right\}$$

where $T_{G,max}(n)$ and $T_{G,min}(n)$ depend on the gain $g_{Real,lim}(n)$ computed by the gain control 10. If only a small gain is introduced by the gain control 10 (or no gain at all), only a small gain is introduced by the shape control 11 (or no gain at all). A significant gain introduced by the gain control 10, on the other hand, will result in a significant gain introduced by the shape control 11 (see also Figure 4).

In the example shown in Figure 2 the signal $\tilde{r}_{Gain}(n)$ obtained by processing the received speech signal x(n) by the gain control 10 is shaped. In the shaping process both Discrete Fourier Transformations (DFT) / Inverse Discrete Fourier Transformations (IDFT) and $N_{DFT}$ multiplications for each frequency bin in the frequency domain are avoided in view of computational costs. For this purpose, a low order FIR filter is 12 is designed. It is noted that the delay introduced by the FIR filter is significantly lower than the one that would be introduced by DFT/IDFT processing of $\tilde{r}_{Gain}(n)$.

According to the present example, the inverse of the squared magnitude of the desired spectral shape correction is transformed into the time domain

$$\mathbf{a}_{Des}(n) \quad = \quad IDFT\left\{\frac{1}{\left|G_{Des}(e^{j\Omega_k},n)\right|^2}\right\}$$

with the vector containing the auto correlation coefficients $\mathbf{a}_{DES,i}(n)$

$$\mathbf{a}_{Des}(n) \quad = \quad \left[a_{Des,0}(n),a_{Des,1}(n),\ldots,a_{Des,N_{DFT}-1}(n)\right]^T$$

where $N_{DFT}$ denotes the order of the DFT. This vector is shortened to the order of the desired FIR filter $(N_{FIR})$ + 1:

$$\mathbf{a}_{Des,mod}(n) \quad = \quad \left[a_{Des,mod,0}(n),a_{Des,mod,1}(n),\ldots,a_{Des,mod,N_{FIR}}(n)\right]^T$$

by

$$\mathbf{a}_{Des,mod}(n) \quad = \quad \mathbf{W}_{cut}\,\mathbf{a}_{Des}(n)$$

with

$$\mathbf{W}_{cut} = \begin{bmatrix} w_{0,0} & 0 & \cdots & 0 & 0 & \cdots & 0 \\ 0 & w_{1,1} & \cdots & 0 & 0 & \cdots & 0 \\ \vdots & \vdots & \ddots & \vdots & \vdots & & \vdots \\ 0 & 0 & \cdots & w_{N_{FIR},N_{FIR}} & 0 & \cdots & 0 \end{bmatrix}.$$

The elements of the matrix $\mathbf{W}_{cut}$ are given by

$$w_{i,i} = 1 \quad \text{for} \quad i \in \{0,\ldots,N_{FIR}\}.$$

The vector of the filter coefficients a(n) of the FIR filter 12

$$\mathbf{a}(n) = \left[ a_0(n), a_1(n), \ldots, a_{N_{FIR}-1} \right]^T$$

are determined by the shape control 11 to reproduce the shape $G_{des}(e^{j\Omega k}, n)$. For this purpose, the following vector equation has to be solved

$$\mathbf{a}(n) = \mathbf{A}_{Des,mod}^{-1}(n)\, \widetilde{\mathbf{a}}_{Des,mod}(n)$$

with

$$\mathbf{A}_{Des,mod}(n) = \begin{bmatrix} a_{Des,mod,0}(n) & a_{Des,mod,1}(n) & \cdots & a_{Des,mod,N_{FIR}-1}(n) \\ a_{Des,mod,1}(n) & a_{Des,mod,0}(n) & \cdots & a_{Des,mod,N_{FIR}-2}(n) \\ \vdots & \vdots & \ddots & \vdots \\ a_{Des,mod,N_{FIR}-1}(n) & a_{Des,mod,N_{FIR}-2}(n) & \cdots & a_{Des,mod,0}(n) \end{bmatrix}$$

and

$$\widetilde{\mathbf{a}}_{DES,mod}(n) = \left[ a_{Des,mod,1}(n), a_{Des,mod,2}(n), \ldots, a_{Des,mod,N_{FIR}} \right]^T.$$

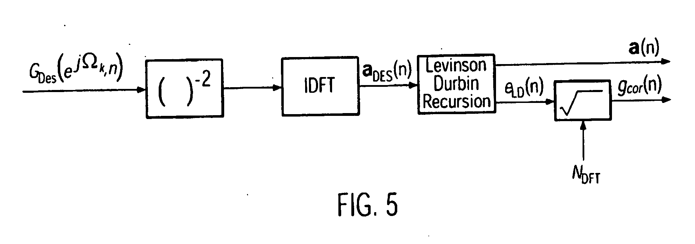

The above vector equation, e.g., can efficiently be solved by means of the well-known Levinson-Durbin recursion algorithm (see, e.g., Acoustic Echo and Noise Control, E. Hänsler and G. Schmidt, John Wiley & Sons, New York, 2004). The output of the FIR filter 12 has to be enhanced by the correct gain $g_{cor}(n)$ provided by the shape control 11 (see Figures 2 and 5). This can be achieved by using the energy of the residual signal $e_{LD}(n)$ obtained by the Levinson-Durbin recursion algorithm

$$g_{cor}(n) = \sqrt{\frac{N_{DFT}}{e_{LD}(n)}}.$$

As already mentioned above an IIR filter may be employed rather than the FIR filter 12 of Figure 2. In this case, the inverse of the frequency response used for the FIR filter design has to be used

$$a_{Des,IIR}(n) = IDFT\left\{\left|G_{Des}(e^{i\Omega}, n)\right|^2\right\}.$$

After carrying out the same computations described above but using the inverse frequency response $a_{Des,IIR}(n)$ an all-pole IIR filter results that can be used for shaping the received audio signal x(n).

Employment of either an FIR filter or an IIR filter for the equalization of the received audio signal x(n) exhibits different advantages. For example, the IIR filter may be superior (inferior) to the FIR filter in modeling small gain peaks (attenuation peaks). Therefore, it might be preferred to model the desired spectral shape by both the IIR and the FIR filters and to compare the model results with each other and choose the better one for shaping.

For instance, when the Levinson-Durbin recursion algorithm is employed, the prediction error power of the residual signal is automatically obtained and depending on the prediction error power on a frame by frame basis the result of either the FIR filter or the IIR filter can be used for the subsequent processing, i.e. shaping. If the Levinson-Durbin recursion algorithm is not used, the respective prediction error powers of the residual signals can be calculated by

$$e_{LD,FIR}(n) = a_{Des,0}(n) - \sum_{i=0}^{N_{FIR}-1} a_i(n)\, a_{Des,i+1}(n)$$

and

$$e_{LD,IIR}(n) = a_{Des,IIR,0}(n) - \sum_{i=0}^{N_{IIR}-1} a_{IIR,i}(n)\, a_{Des,IIR,i+1}(n)$$

that can subsequently be compared with each other for determining the best choice for each frame.

All previously discussed embodiments are not intended as limitations but serve as examples illustrating features and advantages of the invention. It is to be understood that some or all of the above described features can also be combined in different ways.

## Claims

1. Method for audio signal processing in a communication system comprising a near party and a remote party, comprising
   receiving an audio signal (x(n)) that is transmitted by the remote party to the near party;
   receiving a microphone signal m(n) from the near party;
   estimating local background noise present in the microphone signal m(n);
   estimating local acoustic echo present in the microphone signal m(n); and
   adjusting the gain of the received audio signal (x(n)) based on the estimated local background noise and the estimated local acoustic echo.

2. The method according to claim 1, further comprising adjusting the spectral shape of the received audio signal (x(n)) based on both the estimated local background noise and the estimated local acoustic echo.

3. The method according to claim 2, wherein a desired spectral shape is modeled by both an IIR filter and an FIR filter, the model results of both filters are compared with each other for each frame, and for each frame the model result that better matches the desired spectral shape is used for the adjusting of the spectral shape of the received audio signal (x(n)).

4. The method according to claim 3, wherein the spectral shape of the received audio signal (x(n)) is adjusted by means of an IIR filter based on the Inverse Discrete Fourier Transform of the squared magnitude of the desired spectral shape and an FIR filter based on the Inverse Discrete Fourier Transform of the inverse of the squared magnitude of the desired spectral shape.

5. The method according to one of the claims 2 to 4, wherein the gain and the spectral shape of the received audio signal (x(n)) are adjusted based on an average peak echo-to-noise ratio.

6. The method according to claim 5, wherein the average peak echo-to-noise ratio is smoothed in frequency by an IIR filter.

7. Computer program product, comprising one or more computer readable media having computer-executable instructions for performing the steps of the method according to one of the claims 1 to 6.

8. Signal processing means for processing a received audio signal (x(n)) transmitted by a remote party to a near party, comprising
   at least one microphone (6) configured to generate a microphone signal m(n) from the near party;
   a noise reduction filtering means (3) configured to output a signal representing an estimate of local background noise that is present in the microphone signal m(n);
   an echo compensation filtering means (2) configured to output a signal representing an estimate of local echo that is present in the microphone signal m(n); and
   a gain and shape control unit (1) connected with the noise reduction filtering means (3) and the echo compensation filtering means (2) and configured to adjust gain and/or spectral shape of the received audio signal (x(n)) based on both the signal representing an estimate of local background noise and the signal representing an estimate of local echo.

9. The signal processing means according to claim 8, further comprising an amplifier (4) and wherein the echo compensation filtering means (2) is configured to receive a reference signal necessary for adaptation of its filter coefficient either before or after amplification of the received audio signal processed by the gain and shape control unit (1).

10. The signal processing means according to claim 8 or 9, wherein the gain and shape control unit (1) comprises an FIR filter (12) and/or an IIR filter configured to adjust the spectral shape of the received audio signal (x(n)).

11. The signal processing means according to one of the claims 8 to 10, wherein the gain and shape control unit (1) comprises a means configured to estimate the average peak echo-to-noise ratio.

12. The signal processing means according to claim 11, further comprising a means for smoothing in frequency the estimated average peak echo-to-noise ratio.

13. The signal processing means according to one of the claims 8 to 12, further comprising a microphone array comprising one or more directional microphones and a beamforming means configured to obtain a beamformed microphone signal.

14. The signal processing means according to one of the claims 8 to 13, further comprising a first analysis filter bank (7) configured to divide the microphone signal (m(n)) into microphone sub-band signals, a second analysis filter bank (9) configured to divide a reference signal into sub-band signals to be input in the echo compensation filtering means and a synthesis filter bank (8) configured to synthesize microphone sub-band signals filtered by the echo compensation filtering means (2) and the noise reduction filtering means (3).

15. The signal processing means according to one of the claims 8 to 14, further comprising a transmitting means for transmitting the microphone signal filtered by the echo compensation filtering means (2) and the noise reduction filtering means (3) to the remote party.

16. Hands-free set comprising a signal processing means according to claim 15.

**Patentansprüche**

1. Verfahren zur Audiosignalverarbeitung in einem Kommunikationssystem mit einer nahen Partei und einer fernen Partei, das umfasst

   Empfangen eines Audiosignals (x(n)), das von der fernen Partei an die nahe Partei gesendet wird;

   Empfangen eines Mikrofonsignals m(n) von der nahen Partei;

   Schätzen eines lokalen Hintergrundgeräuschs, das in dem Mikrofonsignal m(n) vorhanden ist;

   Schätzen eines lokalen akustischen Echos, das in dem Mikrofonsignal m(n) vorhanden ist; und

   Einstellen der Verstärkung des empfangenen Audiosignals (x(n)) auf der Grundlage des geschätzten lokalen Hintergrundgeräuschs und des geschätzten lokalen akustischen Echos.

2. Das Verfahren gemäß Anspruch 1, das weiterhin das Einstellen der spektralen Form des empfangenen Audiosignals (x(n)) auf der Grundlage sowohl des geschätzten lokalen Hintergrundgeräuschs als auch des geschätzten lokalen akustischen Echos umfasst.

3. Das Verfahren gemäß Anspruch 2, in dem eine gewünschte spektrale Form sowohl durch ein IIR-Filter als auch ein FIR-Filter modelliert wird, die Modellergebnisse beider Filter miteinander für jeden Frame verglichen werden und für jeden Frame das Modellergebnis, das besser mit der gewünschten spektralen Form übereinstimmt, zum Einstellen der spektralen Form des empfangenen Audiosignals (x(n)) verwendet wird.

4. Das Verfahren gemäß Anspruch 3, in dem die spektrale Form des empfangenen Audiosignals (x(n)) mithilfe eines IIR-Filters auf der Grundlage der inversen diskreten Fouriertransformation des Absolutquadrats der gewünschten spektralen Form und eines FIR-Filters auf der Grundlage der inversen diskreten Fouriertransformation des invertierten Absolutquadrats der gewünschten spektralen Form eingestellt wird.

5. Das Verfahren gemäß einem der Ansprüche 2 bis 4, in dem die Verstärkung und die spektrale Form des empfangenen Audiosignals (x(n)) auf der Grundlage eines mittleren Amplituden-Echo-zu-Geräusch-Verhältnisses eingestellt werden.

6. Das Verfahren gemäß Anspruch 5, in dem das mittlere Amplituden-Echozu-Geräusch-Verhältnis durch ein IIR-Filter in der Frequenz geglättet wird.

7. Computerprogrammprodukt, das ein oder mehrere computerlesbare Medien umfasst, die computerausführbare Anweisungen zum Ausführen der Schritte des Verfahrens gemäß einem der Ansprüche 1 bis 6 aufweisen.

8. Signalverarbeitungseinrichtung zum Verarbeiten eines empfangenen Audiosignals (x(n)), das von einer fernen Partei an eine nahe Partei gesendet wird, die umfasst

   zumindest ein Mikrofon (6), das dazu ausgebildet ist, ein Mikrofonsignal m(n) von der nahen Partei zu erzeugen;

   eine Geräuschreduktionsfiltereinrichtung (3), die dazu ausgebildet ist, ein Signal auszugeben, das eine Schätzung eines lokalen Hintergrundgeräuschs darstellt, das in dem Mikrofonsignal m(n) vorhanden ist;

   eine Echokompensationsfiltereinrichtung (2), die dazu ausgebildet ist, ein Signal auszugeben, das eine Schätzung eines lokalen Echos darstellt, das in dem Mikrofonsignal m(n) vorhanden ist; und

   eine Verstärkungs- und Formsteuereinrichtung (1), die mit der Geräuschreduktionsfiltereinrichtung (3) und der Echokompensationsfiltereinrichtung (2) verbunden ist und dazu ausgebildet ist, eine Verstärkung und/oder eine spektrale Form des empfangenen Audiosignals (x(n)) auf der Grundlage sowohl des Signals, das eine Schätzung eines lokalen Hintergrundgeräuschs darstellt, als auch des Signals, das eine Schätzung eines lokalen Echos darstellt, einzustellen.

9. Die Signalverarbeitungseinrichtung gemäß Anspruch 8, die weiterhin einen Verstärker (4) umfasst, und in der die Echokompensationsfiltereinrichtung (2) dazu ausgebildet ist, ein Referenzsignal zu empfangen, das für die Einstellung ihrer Filterkoeffizienten entweder vor oder nach der Verstärkung des empfangenen Audiosignals, das durch die Verstärkungs- und Formsteuereinrichtung (1) verarbeitet wird, notwendig ist.

10. Die Signalverarbeitungseinrichtung gemäß Anspruch 8 oder 9, in der die Verstärkungs- und Formsteuereinrichtung (1) ein FIR-Filter (12) und/oder ein IIR-Filter umfasst, das dazu ausgebildet ist, die spektrale Form des empfangenen Audiosignals (x(n)) einzustellen.

11. Die Signalverarbeitungseinrichtung gemäß einem der Ansprüche 8 bis 10, in der die Verstärkungs- und Formsteuereinrichtung (1) eine Einrichtung umfasst, die dazu ausgebildet ist, das mittlere Amplituden-Echo-zu-Geräusch-Verhältnis zu schätzen.

**12.** Die Signalverarbeitungseinrichtung gemäß Anspruch 11, die weiterhin eine Einrichtung zum Glätten des geschätzten mittleren Amplituden-Echo-zu-Geräusch-Verhältnisses in der Frequenz umfasst.

**13.** Die Signalverarbeitungseinrichtung gemäß einem der Ansprüche 8 bis 12, die weiterhin eine Mikrofonanordnung mit einem oder mehreren Richtmikrofonen und einer Beamformer-Einrichtung, die dazu ausgebildet ist, ein gebeamformtes Mikrofonsignal zu erhalten, umfasst.

**14.** Die Signalverarbeitungseinrichtung gemäß einem der Ansprüche 8 bis 13, die weiterhin eine erste Analysefilterbank (7), die dazu ausgebildet ist, das Mikrofonsignal m(n) in Mikrofonteilbandsignale zu teilen, eine zweite Analysefilterbank (9), die dazu ausgebildet ist, ein Referenzsignal in Teilbandsignale zu teilen, die in die Echokompensationsfiltereinrichtung einzugeben sind, und eine Synthesefilterbank (8), die dazu ausgebildet ist, Mikrofonteilbandsignale, die durch die Echokompensationsfiltereinrichtung (2) und die Geräuschreduktionsfiltereinrichtung (3) gefiltert worden sind, zu synthetisieren.

**15.** Die Signalverarbeitungseinrichtung gemäß einem der Ansprüche 8 bis 14, die weiterhin eine Sendeeinrichtung zum Senden des durch Echokompensationsfiltereinrichtung (2) und die Geräuschreduktionsfiltereinrichtung (3) gefilterten Mikrofonsignals an die ferne Partei umfasst.

**16.** Freihandeinrichtung, die eine Signalverarbeitungseinrichtung gemäß Anspruch 15 umfasst.

**Revendications**

**1.** Procédé de traitement de signal audio dans un système de communication comprenant une partie proche et une partie distante, comprenant
la réception d'un signal audio (x(n)) transmis par la partie distante vers la partie proche ;
la réception d'un signal de microphone m(n) depuis la partie proche ;
l'estimation du bruit de fond local présent dans le signal de microphone m(n) ;
l'estimation de l'écho acoustique local présent dans le signal de microphone m(n) ; et
le réglage du gain du signal audio reçu (x(n)) sur la base du bruit de fond local estimé et de l'écho acoustique local estimé.

**2.** Procédé selon la revendication 1, comprenant en outre le réglage de la forme spectrale du signal audio reçu (x(n)) sur la base à la fois du bruit de fond local estimé et de l'écho acoustique local estimé.

**3.** Procédé selon la revendication 2, dans lequel la forme spectrale désirée est modélisée à la fois par un filtre IIR et par un filtre FIR, les résultats de modèle des deux filtres sont comparés entre eux pour chaque trame et pour chaque trame, le résultat du modèle correspondant le mieux à la forme spectrale désirée est utilisé pour le réglage de la forme spectrale du signal audio reçu (x(n)).

**4.** Procédé selon la revendication 3, dans lequel la forme spectrale du signal audio reçu (x(n)) est réglée au moyen d'un filtre IIR basé sur la transformée de Fourier discrète inverse de l'amplitude élevée au carré de la forme spectrale désirée et d'un filtre FIR basé sur la transformée de Fourier discrète inverse de l'inverse de l'amplitude élevée au carré de la forme spectrale désirée.

**5.** Procédé selon l'une des revendications 2 à 4, dans lequel le gain et la forme spectrale du signal audio reçu (x(n)) sont réglés en se basant sur un rapport crête moyen écho sur bruit.

**6.** Procédé selon la revendication 5, dans lequel le rapport crête moyen écho sur bruit est lissé en fréquence par un filtre IIR.

**7.** Produit de programme informatique comprenant un ou plusieurs supports lisibles par un ordinateur, comportant des instructions lisibles par un ordinateur pour exécuter les étapes du procédé selon l'une des revendications 1 à 6.

**8.** Moyen de traitement de signal pour traiter un signal audio reçu (x(n)) transmis par une partie distante vers une partie proche, comprenant

au moins un microphone (6) configuré pour générer un signal de microphone m(n) depuis la partie proche ;

un moyen de filtrage à réduction de bruit (3) configuré pour fournir en sortie un signal représentant une estimation du bruit de fond local présent dans le signal de microphone m(n) ;

un moyen de filtrage à compensation d'écho (2) configuré pour fournir en sortie un signal représentant une estimation de l'écho local présent dans le signal de microphone m(n) ; et

une unité de contrôle de gain et de forme (1) connectée au moyen de filtrage à réduction de bruit (3) et au moyen de filtrage à compensation d'écho (2) et configurée pour régler le gain et/ou la forme spectrale du signal audio reçu (x(n)) sur la base à la fois du signal représentant une estimation du bruit de fond local et du signal représentant une estimation de l'écho local.

9.   Moyen de traitement de signal selon la revendication 8, comprenant en outre un amplificateur (4) et dans lequel le moyen de filtrage à compensation d'écho (2) est configuré pour recevoir un signal de référence nécessaire pour adapter son coefficient de filtrage à la fois avant et après amplification du signal audio reçu traité par l'unité de contrôle de gain et de forme (1).

10.  Moyen de traitement de signal selon la revendication 8 ou 9, dans lequel l'unité de contrôle de gain et de forme (1) comprend un filtre FIR (12) et/ou un filtre IIR configuré pour régler la forme spectrale du signal audio reçu (x(n)).

11.  Moyen de traitement de signal selon l'une des revendications 8 à 10, dans lequel l'unité de contrôle de gain et de forme (1) comprend un moyen configuré pour estimer le rapport crête moyen écho sur bruit.

12.  Moyen de traitement de signal selon la revendication 11, comprenant en outre un moyen pour lisser en fréquence le rapport crête moyen écho sur bruit estimé.

13.  Moyen de traitement de signal selon l'une des revendications 8 à 12, comprenant en outre un réseau de microphones comprenant un ou plusieurs microphones directionnels et un moyen de formation de faisceau configuré pour obtenir un signal de microphone à faisceau formé.

14.  Moyen de traitement de signal selon l'une des revendications 8 à 13, comprenant en outre un premier banc de filtres d'analyse (7) configuré pour diviser le signal de microphone (m(n)) en signaux de sous-bande de microphone, un deuxième banc de filtres d'analyse (9) configuré pour diviser un signal de référence en signaux de sous-bande destinés à être appliqués à l'entrée du moyen de filtrage à compensation d'écho et un banc de filtres de synthèse (8) configuré pour synthétiser les signaux de sous-bande de microphone filtrés par le moyen de filtrage à compensation d'écho (2) et le moyen de filtrage à réduction de bruit (3).

15.  Moyen de traitement de signal selon l'une des revendications 8 à 14, comprenant en outre un moyen de transmission pour transmettre à la partie distante le signal de microphone filtré par le moyen de filtrage à compensation d'écho (2) et le moyen de filtrage à réduction de bruit (3).

16.  Combiné mains libre comprenant un moyen de traitement de signal selon la revendication 15.

FIG. 1

FIG. 2

FIG. 3

$\hat{B}\left(e^{j\Omega_{k,n}}\right)$

$\hat{E}\left(e^{j\Omega_{k,n}}\right)$

smoothing

$t_{ENR,1}$  $\beta$  $\bar{e}(n)$  $\bar{b}(n)$

$\bar{E}_{Sm}\left(e^{j\Omega_{k,n}}\right)$

ENR estim.

$G_{Des}\left(e^{j\Omega_{k,n-1}}\right)$

$P_{ENR}\left(e^{j\Omega_{k,n}}\right)$

Frequency smoothing

$\gamma$

$P_{ENR,Sm}\left(e^{j\Omega_{k,n}}\right)$

Computation of real gain compensation

$\alpha_g$  $r_g$  $t_{ENR,2}$  $\tau_G$

$z^{-1}$

$G'_{Des}\left(e^{j\Omega_{k,n}}\right)$

Limitation

$g_{Real,lim}$  $\tau_{G,max}$  $\tau_{G,min}$

$G_{Des}\left(e^{j\Omega_{k,n}}\right)$

FIG. 4

18

FIG. 5

**EP 2 048 659 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10141493 A1
- JP 2000190785 A
- EP 1677431 A
- EP 0204718 B1
- EP 1020068 B1
- WO 9626592 A

**Non-patent literature cited in the description**

- **E. HÄNSLER ; G. SCHMIDT.** Acoustic Echo and Noise Control. John Wiley & Sons, 2004
- Microphone Arrays: Signal Processing Techniques and Applications. Springer, 2001
- Adaptive beamforming for audio signal acquisition. **HERBORDT, W. ; KELLERMANN, W.** Adaptive signal processing: applications to real-world problems. Springer, 2003, 155